# EUROPÄISCHE PATENTANMELDUNG

(11) **EP 1 294 110 A2**
(43) Veröffentlichungstag der Anmeldung: **19.03.2003**
(21) Anmeldenummer: 02102268.6
(22) Anmeldetag: 02.09.2002
(51) Int. Cl.: H04B 10/08, H04B 10/17

(54) **Schaltungsanordnung und Verfahren zur Sicherheitsabschaltung eines optischen Verstärkers**

(30) Priorität: 18.09.2001 DE 10146001
(71) Anmelder: SIEMENS AKTIENGESELLSCHAFT, 80333 München (DE)
(72) Erfinder: Rapp, Lutz, Dr., 82041 Deisenhofen (DE)

(57) **Zusammenfassung**

Bei dieser Schaltungsanordnung und dem dazugehörigen Verfahren zur Abschaltung eines optischen Verstärkers wird die Leistung einer Amplified Spontaneous Emission ASE mit einem Korrekturfaktor beaufschlagt und vom einem aus dem optischen Signal ausgekoppelten Messsignal subtrahiert.

## Beschreibung

Die Erfindung bezieht sich auf eine wie im Oberbegriff angegebene Schaltungsanordnung und ein Verfahren zur Sicherheitsabschaltung eines optischen Verstärkers.

Unter dem Begriff eines Verstärkers wird nachfolgend eine Einrichtung verstanden, mit deren Hilfe die Intensität eines optischen Strahles erhöht werden kann.

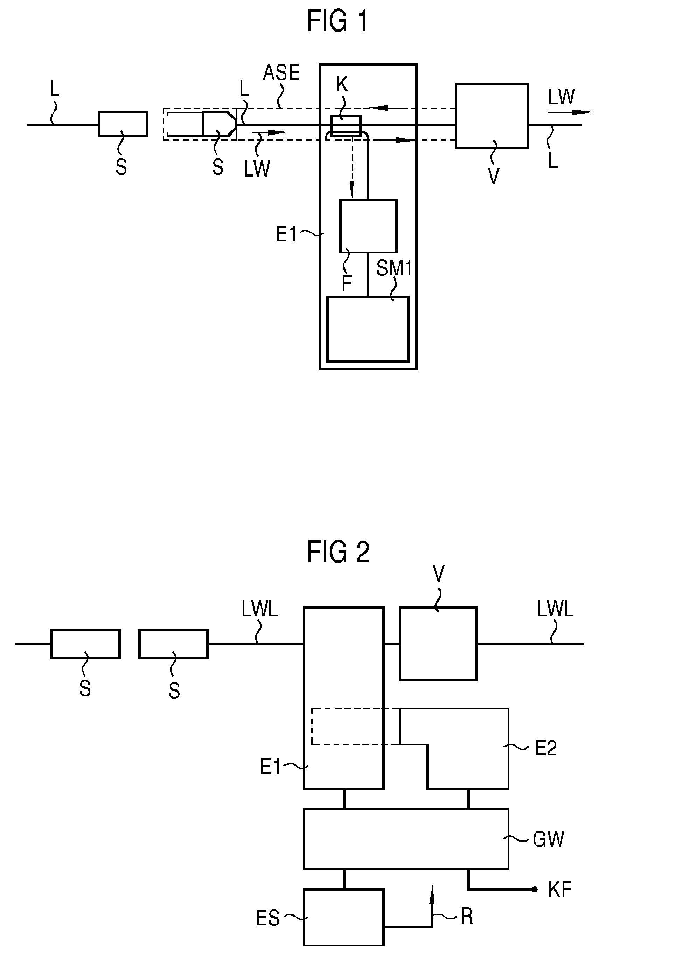

In Figur 1 ist ein Ausschnitt einer Lichtwellenleiterstrecke dargestellt. Ein Lichtwellenleiter L ist über einen optischen Steckverbinder S mit einem optischen Verstärker V verbunden. Optimales Rauschverhalten eines optischen Verstärkers, insbesondere eines Erbium-dotierten Faserverstärkers, resultiert, wenn der Verstärker keine eingangsseitig angeordneten Isolatoren aufweist. Eine durch den optischen Verstärker verursachte Amplified Spontaneous Emission ASE breitet sich entgegen der Ausbreitungsrichtung des optischen Signals auf dem Lichtwellenleiter aus und wird beispielsweise über einen Steckverbinder S reflektiert und wieder an den Eingang des Verstärkers herangeführt.

Um eine Sicherheitsabschaltung des optischen Verstärkers im Unterbrechungsfall zu erreichen, können in entsprechenden Übertragungssystemen über einen optischen Koppler Teile des zum Eingang des optischen Verstärkers V geleiteten optischen Signals einer Überwachungseinheit zugeführt werden. Diese Überwachungseinheit ist zum Beispiel aus einem Filter, insbesondere einem Bandpassfilter und einem diesem nachgeordneten Signalmonitor gebildet. Unterschreitet die gemessene Leistung einen vorgegebenen Schwellwert, wird davon ausgegangen, dass die Lichtwellenleiterstrecke unterbrochen ist, woraufhin beispielsweise eine Sicherheitsabschaltung des optischen Verstärkers ausgelöst wird. Liegt die gemessene Leistung über den vorgegebenen Schwellwert, erfolgt keine Abschaltung, da davon ausgegangen wird, dass optische Signale über die Lichtwellenleiterstrecke zur Messeinrichtung gelangt sind und folglich keine Unterbrechung vorliegen kann.

Im Unterbrechungsfall kann aber unter Umständen bedingt durch Reflexion der Amplified Spontaneous Emission ASE an einem Steckverbinder S am Eingang des Verstärkers eine oberhalb des vorgegebenen Schwellwertes liegende Leistung gemessen werden, die als Eingangssignal interpretiert wird, so daß die zwingend vorgeschriebene Sicherheitsabschaltung unterbleibt.

Zur Sicherstellung der Abschaltung im Unterbrechungsfall werden optische Verstärker deshalb eingangsseitig mit Isolatoren ausgestattet.

Dies bringt den Vorteil mit sich, dass die sich entgegen der Ausbreitungsrichtung des optischen Datensignals ausbreitende Amplified Spontaneous Emission ASE vermieden wird.

Der Einsatz von einem Isolator, beispielsweise einem passiven Element, bringt jedoch den Nachteil mit sich, dass sich die Rauschzahl erhöht und sich dadurch die Abstände zwischen den Regeneratoren entlang der optischen Übertragungsstrecke verringert.

Der Erfindung liegt die Aufgabe zugrunde, eine Schaltungsanordnung und ein Verfahren zur Sicherheitsabschaltung eines optischen Verstärkers anzugeben.

Die Lösung der Aufgabe ergibt sich aus den Merkmalen der Patentansprüche 1 und 7.

Die Erfindung bringt den Vorteil mit sich, dass neben dem Verzicht auf einen Isolator am Eingang des Verstärkers auch auf eine besondere Dimensionierung der verwendeten Verstärker verzicht werden kann.

Die Erfindung bringt den weiteren Vorteil mit sich, dass die Abstände zwischen den entlang der Lichtwellenleiterstrecke angeordneten Regeneratoren nicht verringert werden.

Weitere Besonderheiten sind in den Unteransprüchen angegeben.

Die Schaltungsanordnung und das Verfahren zur Sicherheitsabschaltung eines optischen Verstärkers werden in einer nachfolgenden näheren Erläuterung eines Ausführungsbeispiels anhand von Zeichnungen ersichtlich.

Es zeigen:
Figur 1 ein Blockschaltbild entsprechend dem Stand der Technik,
Figur 2 ein Blockschaltbild einer Schaltungsanordnung zur Sicherheitsabschaltung eines optischen Senders und
Figur 3 eine Ausgestaltung des in Fig. 2 gezeigten Blockschaltbildes.

In Figur 2 ist ein Blockschaltbild einer Schaltungsanordnung zur Sicherheitsabschaltung eines optischen Verstärkers wiedergegeben. Bei dieser Schaltungsanordnung wird ausgehend von der Schaltungsanordnung der Figur 1 eine zweite Einheit E2 zur Messung der Amplified Spontaneous Emission ASE sowie eine Verknüpfungseinheit GW zur Verknüpfung der beiden Ausgangssignale der ersten und zweiten Einheit E1, E2 eingefügt. Das Ausgangssignal der Verknüpfungseinheit GW wird dann einer Entscheidereinheit ES zur Auswertung zugeführt.

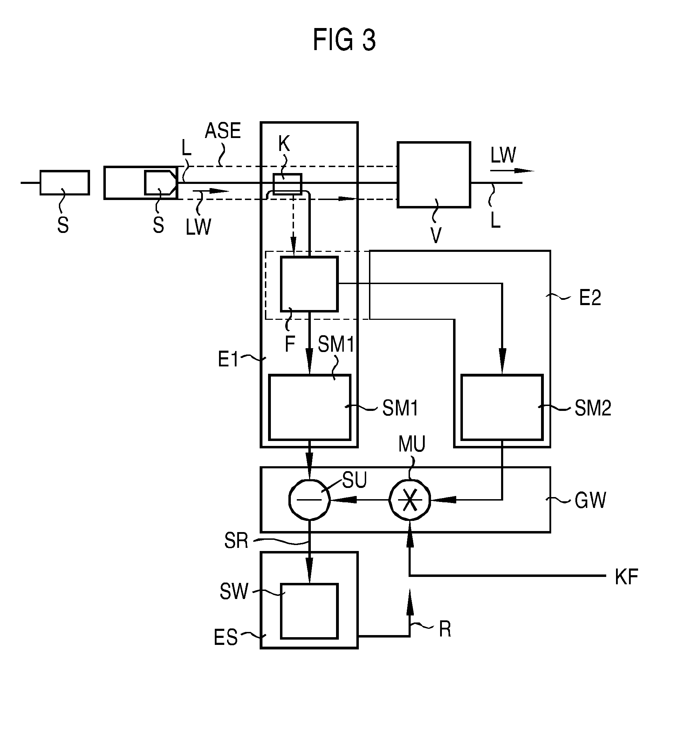

Eine nähere Ausgestaltung des in Figur 2 gezeigten Blockschaltbildes ist nachfolgend beschrieben und in Figur 3 abgebildet.

In Figur 3 ist eine Ausgestaltung einer Schaltungsanordnung zur Sicherheitsabschaltung eines optischen Verstärkers wiedergegeben. Zur optischen Verstärkung der optischen Signale wird beispielsweise ein Pumplasers verwendet. In einer zweiten Einheit E2 ist eine Einrichtung zur Leistungsmessung, insbesondere ein Amplified Spontaneous Emission ASE Signalmonitor SM2 angeordnet. Durch diese in Figur 3 gezeigte Ausprägung wird das aus dem Lichtwellenleiter L ausgekoppelte optische Signal LW um den Betrag der Amplified Spontaneous Emission ASE der dem optischen Signal LW überlagert ist reduziert. Die Amplified Spontaneous Emission ASE wird anhand der außerhalb des Signalbandes des ausgekoppelten optischen Signals LW gemessenen Leistung geschätzt und von der detektierten Eingangsleistung des optischen Signals subtrahiert. Diese Trennung von innerhalb und außerhalb liegenden Signalkomponenten kann beispielsweise mit einem Bandpassfilter realisiert werden. Unter einem Bandpassfilter wird jede Einrichtung zur spektralen Trennung von Leistungsanteilen verstanden. Eine spektrale Trennung kann zum Beispiel auch mit einem optischen Spektrumanalysator durchgeführt werden. Eine Lichtleistung außerhalb des Wellenlängenbandes des übertragenen optischen Signals wird durch die zweite Entscheidereinheit E2 detektiert. Aus diesen außerhalb des Wellenlängenbandes des optischen Signals LW auftretenden Amplified Spontaneous Emission ASE wird dann die in dem optischen Signals LW überlagerte Amplified Spontaneous Emission ASE geschätzt. Diese mit einem Korrekturfaktor KF multiplizierte Leistung wird von der Eingangsleistung des optischen Signals subtrahiert, so dass man eine Signalleistung des optischen Signals LW erhält. Die Leistung des optischen Signals LW wird dann in der Entscheidereinheit ES beispielsweise einem Schwellwert-Entscheider SW zugeführt und bei unterschreiten eines bestimmbaren Schwellwertes der optische Verstärker V abgeschaltet.

Die Abschätzung der in dem optischen Signal LW enthaltenen Amplified Spontaneous Emission ASE ist größtmöglich einzustufen. Im extremsten Fall bedeutet diese, dass man die spektrale Form der Amplified Spontaneous Emission ASE bei nahezu 100% Inversion im Verstärkereingang zugrunde legt. Diese Schätzung kann mithilfe von Zusatzmodulen verifiziert werden. So kann z.B. auch die in die Lichtwellenleiter eingekoppelte Pumpleistung in die Korrektur der in der zweiten Einheit E2 gemessenen Amplified Spontaneous Emission ASE ASE berücksichtigt werden.

Verwendet man wie in Figur 3 gezeigt beispielsweise ein Reflexionsfilter F, so ist ein Filter ausreichend, um sowohl die Messbandbreite des Signalmonitors SM1 auf den von den Signalwerten belegten Wellenlängenbereich zu beschränken als auch die außerhalb dieses Wellenlängenbereichs auftretenden Amplified Spontaneous Emission ASE zu bestimmen. In weiterführenden Ausgestaltungen der in Figur 3 gezeigten Schaltungsanordnung kann es von Vorteil sein, ein zusätzliches schmalbandiges Filter vor dem Bandpassfilter F anzuordnen, so dass nur die zur Schätzung der zu subtrahierenden Amplified Spontaneous Emission ASE Frequenzkomponenten verwendet werden, die sehr nahe an dem Signalband des optischen Signals liegen. Dies ist z.B. in einem WDM-System von Vorteil, in dem ein Bandfilter zum Trennen von C-Band- und L-Bandanteilen eingesetzt wird.

## Patentansprüche

1. Schaltungsanordnung zur Sicherheitsabschaltung eines optischen Verstärkers (V) mit einer ersten Einheit (E1) zur Auswertung eines in einem Lichtwellenleiter (L) geführten optischen Signals (LW),
**dadurch gekennzeichnet,**
**dass** eine zweite Einheit (E2) zur Messung einer in dem Lichtwellenleiter (L) geführten Amplified Spontaneous Emission (ASE) vorgesehen ist,
**dass** eine Entscheidereinheit (ES) vorgesehen ist, der ein um die Amplified Spontaneous Emission (ASE) bereinigter Messwert (SR) des detektierten optischen Signals (LW) zugeführt wird.

2. Schaltungsanordnung nach Anspruch 1,
**dadurch gekennzeichnet,**
**dass** in der ersten Einheit (E1) ein Koppler (K) zur Detektion des in dem Lichtwellenleiter (L) geführten optischen Signals (LW) sowie ein mit dem Koppler verbundenes Bandpassfilter (F) und diesem nachgeschaltet ein Signalmonitor (SM1) zur Leistungsmessung angeordnet ist.

3. Schaltungsanordnung nach einem der vorhergehenden Ansprüche,
**dadurch gekennzeichnet,**
**dass** die zweite Einheit (E2) eine Einrichtung zur Leistungsmessung (SM2) der Amplified Spontaneous Emission (ASE) oder Teilen des Ausgangssignals des Bandpassfilters (F) aufweist.

4. Schaltungsanordnung nach Anspruch 3,
**dadurch gekennzeichnet,**
**dass** zwischen der ersten Einheit (E1) und der zweiten Einheit (E2) eine Verknüpfungseinheit (GW) zur Abschätzung für das in den optischen Verstärker (V) eingekoppelte optische Signal (LW) vorgesehen ist.

5. Schaltungsanordnung nach Anspruch 3 oder 4,
**dadurch gekennzeichnet,**
**dass** die Verknüpfungseinheit (GW) einen Multiplizierer (MU) und einen Subtrahierer (SU) aufweist, wobei das Ausgangssignal der zweiten Einheit (E2) mit einem Korrekturfaktor (KF) im Multipizierer (MU) multipliziert und in einer nachgeordneten Subtrahiereinheit (SU) von dem Ausgangssignal des in der ersten Einheit (E1) angeordneten Signalmonitors (SM1) subtrahiert wird.

6. Schaltungsanordnung nach Anspruch 5,
**dadurch gekennzeichnet,**
**dass** eine Entscheidereinheit (ES) vorgesehen ist, der das Ausgangssignal (SR) der Verknüpfungseinheit (GW) zugeführt wird und
**dass** mit dem Ausgangssignal der Entscheidereinheit (R, ES) die Ansteuerung des optischen Verstärkers (V) durchführbar ist.

7. Verfahren zur Sicherheitsabschaltung eines optischen Verstärkers (V), wobei das in dem Lichtwellenleiter (L)geführte optische Signal (LW) ausgewertet wird,
**dadurch gekennzeichnet,**
**dass** eine in dem Lichtwellenleiter (L) geführte Amplified Spontaneous Emission (ASE) erfasst wird,
**dass** ein um die Amplified Spontaneous Emission (ASE) bereinigter Meßwert (SR) des detektierten optischen Signals (LW) gebildet wird.

8. Verfahren nach Anspruch 7,
**dadurch gekennzeichnet,**
**dass** Teile des optischen Signals (LW) aus dem Lichtwellenleiter (L) ausgekoppelt werden, und einem Bandpassfilter (F) und diesem nachgeordnet einem Signalmonitor (SM1) zugeführt werden.

9. Verfahren nach Anspruch 7 oder 8,
**dadurch gekennzeichnet,**
**dass** zumindest Teile außerhalb des Durchlaßbereichs des Bandpassfilters (F) liegenden spektralen Komponenten einer Einrichtung zur Leistungsmessung (SM2) zugeführt werden.

10. Verfahren nach Anspruch 9,
**dadurch gekennzeichnet,**
**dass** aus den innerhalb und außerhalb des Durchlaßbereichs des Bandpassfilters gemessenen Signalanteilen Signalleistungen bestimmt werden.

11. Verfahren nach einem der Ansprüchen 6, 7 und 8,
**dadurch gekennzeichnet,**
**dass** die außerhalb des Durchlaßbereichs liegende Signalleistung mit einem Korrekturfaktor (KF) multipliziert und von der innerhalb des Durchlaßbereichs liegenden Signalleistung subtrahiert wird.
